(19) Europäisches Patentamt
European Patent Office
Office européen des brevets

(11) Publication number: 0 097 032 B1

(12) EUROPEAN PATENT SPECIFICATION

(45) Date of publication of patent specification: 16.08.89

(51) Int. Cl.⁴: H 04 N 9/04, G 03 B 7/08

(21) Application number: 83303345.9

(22) Date of filing: 09.06.83

# (54) Electronic cameras.

(30) Priority: 10.06.82 JP 99751/82

(43) Date of publication of application: 28.12.83 Bulletin 83/52

(45) Publication of the grant of the patent: 16.08.89 Bulletin 89/33

(84) Designated Contracting States: AT DE FR GB NL

(56) References cited:
DE-A-2 445 144
GB-A-2 017 296

PATENTS ABSTRACTS OF JAPAN, vol. 5, no. 55 (E-52)727r, 16th April 1981 & JP-A-56 4993

(73) Proprietor: SONY CORPORATION
7-35 Kitashinagawa 6-Chome Shinagawa-ku
Tokyo 141 (JP)

(72) Inventor: Kutaragi, Ken c/o Sony Corporation
7-35, Kitashinagawa 6-chome Shinagawa-ku
Tokyo (JP)

(74) Representative: Cotter, Ivan John et al
D. YOUNG & CO. 10 Staple Inn
London WC1V 7RD (GB)

EP 0 097 032 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to electronic cameras.

In producing a colour image of a subject with a video camera or the like, it is important to determine the colour of the light incident upon the subject. So-called "white" light can in fact be of varying colours or colour temperatures which a human will subjectively identify as white. For example, a room illuminated by incandescent lamps will appear normal to human vision, even though the colour of the light is more red than brilliant sunlight, which is also subjectively identified as normal. Known television cameras must be adjusted, in response to incident light of different colours, so that the colour white is reproduced as "white" on a monitor. Such known television cameras include means by which the white balance can be selectively adjusted to any of four discrete settings roughly suitable for four sources of light, such as brilliant sunlight, cloudy daylight, fluorescent lamps, and incandescent lamps. Thus, the known cameras provide only a coarse or approximate white balance adjustment, and a fine adjustment of the white balance of the displayed colour image or picture must be performed by means of white balance adjustment of a monitoring apparatus, such as a video tape recorder, a magnetic disc recorder, or the like.

When a television camera is moved to follow a subject, the white balance necessary to produce the colour white in a subjectively pleasing manner varies in response to movement of the subject through shadows and bright sunlight. Since the adjustment with the known television cameras is only a coarse adjustment, an abrupt and unnatural change occurs in the white balance when the four-position adjustment is changed from one setting to another to compensate for changes in the colour of the incident light. It is to be appreciated that the range of changes in the white balance can be quite large when a television camera and portable video tape recorder are used together, making adjustment of the white balance important.

According to one known television camera, a light diffusing cap is placed over the lens of the camera and the white balance is adjusted accordingly. As can be appreciated, however, such a camera is inconvenient and cumbersome to use, since picture taking must be interrupted to set the camera.

UK Patent Application Publication No. GB—A—2,017,296 discloses an electronic camera (a colour television camera) comprising:

means for producing a colour image signal corresponding to an object in a field of view of the camera and having an adjustable white balance;

first light receiving means for generating a first signal in response to the luminous intensity of incident light in a first spectrum;

second light receiving means for generating a second signal in response to the luminous intensity of incident light in a second spectrum; and

means responsive to the relative values of the first and second signals for correspondingly adjusting the white balance to adapt the camera to the incident light. The first and second spectra are blue and red, respectively. Similar cameras are disclosed in German Patent Application Publication No. DE—A—2,445,144 and Japanese Patent Application Publication No. JP—A—56,4993.

Known still cameras which produce video signals from optical images do not generally include means for adjusting the white balance. A four-way adjustment such as that provided in a television camera could be included in such a still camera so that white balance adjustment could be carried out. However, such an adjustment has not heretofore been provided in a still camera because the camera must be suitable for snapshots and, therefore, it must be highly portable. The white balance is usually preset for such a still camera to provide easy operation, and, therefore, the white balance is frequently incorrect. The effect of misadjustment in the white balance is, fortunately, not as pronounced for a still camera as for a television camera, since more latitude is available in taking shots with a still camera than with a television camera. Nevertheless, it is preferable for the white balance of a still camera to be capable of being set accurately.

According to the present invention there is provided an electronic camera comprising:

means for producing a colour image signal corresponding to an object in a field of view of the camera and having an adjustable white balance;

first light receiving means for generating a first signal in response to the luminous intensity of incident light in a first spectrum;

second light receiving means for generating a second signal in response to the luminous intensity of incident light in a second spectrum; and

means responsive to the relative values of the first and second signals for correspondingly adjusting the white balance to adapt the camera to the incident light; characterised in that:

the camera includes means for recording the colour image signal on a record medium;

the first and second light receiving means are responsive to the luminous intensity of incident light in the mercury and near infrared spectra, respectively; and

the means for adjusting the white balance is operative, in order to adapt the camera for use with incident light from a fluorescent lamp, incident light from an incandescent lamp, or natural incident light, to:

(i) set the white balance for light from a fluorescent lamp when the first signal corresponds to a high luminous intensity in the mercury spectrum and the second signal corresponds to a low luminous intensity in the near infrared spectrum;

(ii) set the white balance for light from an incandescent lamp when the first signal corresponds to a low luminous intensity in the mercury spectrum and the second signal corresponds to a high luminous intensity in the near infrared spectrum; and

(iii) set the white balance for natural light when the first and second signals correspond to high luminous intensities in both the mercury spectrum and the near infrared spectrum.

Thus, the white balance can be set to correspond with whether the light illuminating the object is light from a fluorescent lamp, light from an incandescent lamp or natural light.

In a preferred form of electronic camera embodying the invention and described hereinbelow, not only is the white balance set automatically to correspond with the type of light illuminating the subject, but the white balance is continuously adjusted when the light source is daylight, the white balance is accurately set without operator selection, and the white balance is set automatically when an electronic flash unit is used therewith to illuminate the subject.

The invention will now be further described, by way of illustrative and non-limiting example, with reference to the accompanying drawings, in which:

Figure 1 is a graphical illustration of luminous intensity versus wavelength of light to which reference will be made in explaining the operation of a camera embodying the present invention;

Figure 2 is a diagrammatic illustration of an electronic camera according to an embodiment of the present invention;

Figure 3 is a block diagram of a portion of the embodiment of Figure 2;

Figure 4 is graphical illustration of luminous intensity versus wavelength of light from an electronic flash unit; and

Figures 5A and 5B are respective portions of a flowchart for a programmed microprocessor which may be included in an electronic camera according to an embodiment of the present invention.

Referring to the drawings, and initially to Figure 1 thereof, the spectra of an incandescent lamp and a fluorescent lamp are respectively indicated by curves A and B. The spectra of natural light or daylight in sunny and in cloudy conditions are respectively indicated by curves C and D. In a preferred form of electronic camera forming a preferred embodiment of the present invention and described hereinbelow, the luminous intensity of the mercury spectrum (4358 Angstroms) and the luminous intensity of the near infrared rays are used to identify the colour of light incident on a subject and, therefore, the light source used to illuminate the subject. It is to be appreciated that other spectra can be used to identify the light source as well.

For an incandescent lamp, the luminous intensity of light corresponding to the mercury spectrum (4358 Angstroms) is quite low, whereas the luminous intensity in the near infrared spectrum is quite high (see curve A in Figure 1). For a fluorescent lamp, the luminous intensity is just the opposite to that of an incandescent lamp, that is the luminous intensity in the mercury spectrum is high, whereas the luminous intensity in the near infrared spectrum is low (see curve B in Figure 1). For natural light or daylight, the luminous intensities of light corresponding to the mercury spectrum and the near infrared spectrum are both high (see curves C and D in Figure 1). These properties are utilised in the preferred embodiment of the present invention to identify the light source illuminating the subject.

Thus, the character of a light source can be identified as follows. When the luminous intensity of a light source in the mercury spectrum is high, and that in the near infrared spectrum is low, the light source is identified as a fluorescent lamp. When the luminous intensity in the mercury spectrum is low, and that in the near infrared spectrum is high, the light source is identified as an incandescent lamp. When the luminous intensity in the mercury spectrum is high and that in the near infrared spectrum is also high, the light source is identified as natural light or daylight.

Generally, the white balance of the preferred electronic camera is set in accordance with the relative luminous intensities of the incident light in the mercury and near infrared spectra. When the light source is daylight, the near infrared spectrum varies according to whether the weather is sunny or cloudy (see curves C and D of Figure 1), so that, in that case, the white balance is continuously varied in accordance with such variations in the spectrum.

A still picture electronic camera embodying the present invention will now be described with reference to Figures 2 and 3. In the illustrated embodiment, the still camera includes a solid state image sensing element or sensor and a memory device utilising, for example, a magnetic disc. One field of a video signal from the solid state image sensor is sequentially recorded on the magnetic disc in one of several concentric circular tracks.

In Figure 2, the electronic camera includes a housing 1 which encloses a lens system 2, an iris or diaphragm mechanism 3, a shutter release button 4, a shutter mechanism 5 coupled to the shutter release button 4, a half or semi-silvered mirror 6, a reflecting mirror 7, and a viewfinder 8. These elements are, of course, commonly found in conventional single lens reflex cameras. The electronic camera of Figure 2 also includes elements specific to the electronic still camera, for example a solid state image sensor 9 which is, in the preferred embodiment, a charge coupled device (CCD) which converts the light passing through the half or semi-silvered mirror 6 to a corresponding output signal. A signal processor or controller (or recording circuit) 10 processes the output signal from the solid state image sensor 9 and generates a video signal in response thereto. A magnetic head 12 records the video signal from the controller 10 on a recording medium which is, in the illustrated embodiment, a rotary magnetic disc 11. A motor 13 is used to rotate the magnetic disc 11. A jacket 14 houses the magnetic disc 11 and is so constructed that it can be inserted into the housing 1 from the outside. As explained hereinbefore, each concentric track on the magnetic disc 11 contains one picture image.

In reproducing an image stored on the magnetic disc 11, a playback magnetic head is moved with respect to the disc in a radial direction from, for example, the centre to the outer periphery. Thus, one still picture for each track can be reproduced as an image on an ordinary television receiver or the like.

Figure 3 illustrates in block form the component elements of the signal processor or controller 10 of Figure 2. A solid state image sensor 15, for example a single plate type using an optical filter with a chequered pattern, is used to colour separate the light from the lens 2 and produce primary colour signals R, G and B. The primary colour signals R, G and B from the solid state image sensor 15 are supplied through respective preamplifiers 16, 17 and 18 to gain control amplifiers 19, 20 and 21. The gains of the gain control amplifiers 19, 20 and 21 are controlled by control signals from a controller 22 which is, in the preferred embodiment, a suitable microprocessor programmed in accordance with the flowcharts of Figures 5A and 5B. The primary colour signals R, G and B, after amplification by the respective gain control amplifiers 19, 20 and 21, are supplied to an encoder 23 which produces a luminance signal Y, and colour difference signals R—Y and B—Y, in accordance with the primary colour signals R, G and B. The luminance signal Y and colour difference signals R—Y and B—Y are supplied to a modulating circuit 24 included at a rear stage of an imaging portion of the illustrated electronic camera. The colour difference signals are modulated with a predetermined signal and then fed to the magnetic head 12 to be recorded on the magnetic disc 11 (see Figure 2). The luminance signal Y is frequency modulated at a high frequency, while the colour difference signals R—Y and B—Y are converted to low frequency signals in the modulating circuit 24. The colour difference signals R—Y and B—Y, which are converted to low frequencies, appear at every other scanning line to form a picture on a television screen.

A light receiving element 25 receives light corresponding to the mercury spectrum (4358 Angstroms). A light receiving element 26 receives light from the near infrared spectrum, for example at 7000 Angstroms. In the embodiment of Figure 2, the light receiving elements 25 and 26 are both located on a forward slanting upper surface of the housing 1. The light receiving elements 25, 26 perform a photometric analysis of the light incident on the electronic camera, which is assumed to be the same as the light incident on the subject. The light receiving elements 25, 26 supply output signals to respective preamplifiers 27, 28, where the signals are amplified and then supplied to a multiplexer 29. The multiplexer 29 multiplexes the output signals from the preamplifiers 27, 28 and supplies the multiplexed signals to a logarithmic compressor 30. The logarithmic compressor 30 supplies the logarithmically compressed signals to an analog to digital (A/D) converter 31 which generates digital signals in response thereto. The digital signals from the A/D converter 31 are supplied to a comparator 32 and to the controller 22. The comparator 32, which, in the preferred embodiment, includes a memory unit, compares the levels of the sequentially supplied signals which correspond to the light received by the light receiving elements 25 and 26. More specifically, the comparator 32 compares the luminous intensity of the mercury spectrum with that of the near infrared spectrum and supplies the results of the comparison to the controller 22.

The controller 22 determines whether the light source is an incandescent lamp, a fluorescent lamp or daylight, using the algorithms identified above, i.e. the luminous intensities of the mercury and near infrared spectra. The controller 22 supplies gain control signals to the gain control amplifiers 19, 20 and 21 in accordance with the determined identity of the light source. The gains thus determined correspond, of course, to the spectra of an incandescent lamp, a fluorescent lamp, bright sunshine, and cloudy daylight, as indicated by curves A, B, C and D in Figure 1. When the light source is determined as being either an incandescent lamp or a fluorescent lamp, the gains of the gain control amplifiers 19, 20 and 21 are adjusted once only. In the case of daylight, on the other hand, the gains of the gain control amplifiers 20 and 21, corresponding to the colours green and blue, are set once only, but the gain of the gain control amplifier 19, corresponding to the colour red, is continuously varied in response to the luminous intensity of the near infrared spectrum. This continuous adjustment of the red balance for daylight is performed because natural light conditions can change relatively easily, as compared to artificial light conditions, which are relatively fixed.

A signal in accordance with the luminous intensity of the light received by light receiving element 26 for discriminating the near infrared spectrum is digitised by the A/D converter 31 and then later re-converted to an analog signal by a digital to analog (D/A) converter 33. The analog signal from the D/A converter 33 is supplied to a variable resistor 34 which is connected between the controller 22 and the gain control amplifier 19 (corresponding to the colour red). Accordingly, the gain of the gain control amplifier 19, which amplifies the primary colour signal R, can be varied continuously. For cloudy daylight, the variable resistor 34 is set to assume a large resistance value so as to decrease the level of the red primary colour signal R. In the case of bright sunlight, the resistance value of the variable resistor 34 is set to assume a low value so that the level of the red primary colour signal R is high. The white balance can be set over the spectrum from sunny conditions to cloudy conditions, as indicated by curves C and D in Figure 1, by appropriate adjustment of the variable resistor 34.

When the shutter button 4 is actuated, the light receiving elements 25 and 26 detect the luminous intensities of the mercury spectrum and the near infrared spectrum in sequence. The output signals from the elements 25 and 26 are compared in the comparator 32. When the output signal from the light receiving element 26 is large and the output signal from the light receiving element 25 is small, the controller 22 determines that the light source is an incandescent lamp and the gains of the gain control amplifiers 19, 20 and 21 are set to corresponding values. On the other hand, when the output signal from the light receiving element 26 is small and that from the light receiving element 25 is large, the controller 22 determines that the light source is a fluorescent lamp and the gains of gain control amplifiers 19, 20 and 21 are set to corresponding values. When the output signals from the light receiving elements 25 and 26 are both large, the controller 22 determines that the light source is daylight and the gains of the gain control amplifiers 19, 20 and 21 are set to corresponding values. In the case of daylight, the gain of the gain control amplifier 19 is varied continuously by the variable resistor 34 so that the white balance is set over a wide range of conditions, from brilliant sunshine to cloudy daylight.

As is known for conventional still cameras, electronic flash units (also known as strobe lamps) are sometimes used in dimly lit conditions to provide adequate illumination for taking a photograph. It is to be noted that the colour of the light from an electronic flash unit differs from an incandescent lamp, a fluorescent lamp, and daylight. When a video camera is used with such an electronic flash unit to take still pictures, the white balance is incorrectly set if one of the aforementioned settings is employed. The electronic camera embodying the present invention can be designed as described hereinbelow so as automatically to set the white balance to an appropriate value so that the colours will be pleasantly reproduced.

The operation of the present camera in conjunction with an electronic flash unit will now be described. As illustrated in Figure 4, the spectrum of light provided from an electronic flash unit, as indicated by the solid line curve, differs from that of daylight, as indicated by the dotted line curve. The white balance of an electronic camera must be correspondingly adjusted when it is used with such an electronic flash unit so that the colour image produced therefrom is pleasing to a viewer.

As shown in Figures 2 and 3, an on-off switch 35 is provided for an electronic flash unit 36. As depicted in Figure 2, the electronic flash unit 36 can be mounted on an upper portion of the camera housing 1. The switch 35 for the electronic flash unit 36 can be provided, for example, at the front of the camera housing 1 (not shown in Figure 2). In a manner known to those skilled in the art, when the switch 35 is switched on a battery (not shown) for the electronic flash unit 36 charges the unit up to a predetermined voltage, whereupon the unit is placed in a standby mode. As depicted in Figure 3, a charge or switching signal is supplied to the controller 22 in response to the above conditions.

When the control signal is supplied to the controller 22, the controller 22 supplies appropriate control signals to the gain control amplifiers 19, 20 and 21 so that the white balance is set in accordance with the spectrum of the electronic flash unit 36. In other words, when the electronic flash unit 36 is used the white balance is adjusted automatically to correspond with the spectrum of the light emitted by the electronic flash (see the solid line curve of Figure 4) based upon the signal supplied by the switch 35. Thus, it is to be appreciated that no adjustment of the white balance needs to be performed with a reproducing or monitoring apparatus when an electronic flash unit is used with the present electronic camera.

It is further to be appreciated that, since the white balance can be set automatically, a still camera can be used under a variety of conditions, and is especially portable. Thus, the camera can be operated easily for taking snap-shots.

When the light source is daylight, the luminous intensity of the light in the near infrared spectrum is detected and the level of the red primary colour signal is adjusted continuously so that there are no undesirably abrupt changes in the white balance. The white balance is adjusted automatically and continuously when, for example, the video camera is moved to follow a subject which moves from one lighting condition to another so that a pleasing image is always produced. The operator does not, as in the prior art, have to turn a knob to change the white balance of the camera when following a subject, and yet a natural or pleasing image is produced easily.

When an electronic flash unit is used with the electronic camera embodying the present invention, the white balance can be adjusted automatically to correspond to the spectra of the light emitted from the unit. When the image is subsequently monitored, or a hard copy is made, no further adjustments need to be made.

The flowchart of Figures 5A and 5B illustrates programming used in connection with the microprocessor of the controller 22. In Figure 5A, the program reads the luminous intensity of the mercury spectrum as received by the light receiving element 25. After the luminous intensity of the mercury spectrum has been read, the analog data therefrom is converted to digital data by the A/D converter 31. The digital data is stored in the comparator 32 in what can be, for example, a first region of a register. (In Figures 5A and 5B, the reference "$REG_1$" indicates a first memory region of the register included in the comparator 32). The program next reads the luminous intensity of the near infrared spectrum from the light receiving element 26. (The detected near infrared spectrum may be, in the preferred embodiment, around 7000 Angstroms). The analog data from the light receiving element 26 is converted to digital data by the A/D converter 31 and stored in $REG_2$. (The

reference "$REG_2$" indicates a second memory region in the register of the comparator 32).

Ater the digital data has been stored in $REG_1$ and $REG_2$, the program proceeds to a decision point where the data in $REG_1$ is checked to determine whether it is approximately equal to 0. If the data in $REG_1$ is approximately equal to 0, the program proceeds to a decision point where the data in $REG_2$ is checked to determine whether it is approximately equal to 0. If the data in $REG_2$ is approximately equal to 0, the program proceeds to place the camera in a mode identified as an UNDER mode, indicating that it is too dark for a picture to be taken in these conditions. (This mode is identified as the UNDER mode because a picture taken in this light would be underexposed). After the camera has been placed in the UNDER mode, the program sets the data corresponding to illumination from an electronic flash unit, and the white balance of the camera is accordingly set. After the program has set the data for an electronic flash unit, it proceeds to a point "C".

Returning a few steps in the flowchart, if the data in $REG_1$ or $REG_2$ is not approximately equal to 0, the program proceeds to a decision point where it determines whether the data in $REG_1$ is very large in value. If the data in $REG_1$ is not of a very large value, the program proceeds to a point "B". If the data in $REG_1$ is of a very large value, the program proceeds to a decision point to determine whether the data in $REG_2$ is of a very large value. If the data in $REG_2$ is not of a very large value, the program proceeds to the point "B". If the data in $REG_2$ is of a very large value, the program proceeds to place the camera in a mode designated as an OVER mode, indicating that lighting conditions are too bright for a picture to be taken as it is presently set. (It is to be appreciated that this mode is called the OVER mode because a picture taken under these conditions would be over-exposed). The program then proceeds to set the data for the OVER mode. The controller 22 supplies control signals to the diaphragm mechanism 3 (see Figure 2) to close same, thereby reducing the amount of light supplied to the CCD sensor 9. At the same time, the white balance is set for such conditions. The program then continues at the point "C".

At the point "B" in Figure 5B, the data in $REG_1$ is compared to the data in $REG_2$ in the comparator 32. After the comparison is made, the program proceeds to a series of decision points to determine the relationship between the data in $REG_1$ and in $REG_2$. The program identifies the source of the incident light as a result of the tests made at a plurality of decision points.

At a first decision point, the program determines whether the data in $REG_1$ is very much greater than the data in $REG_2$. If it is, the program identifies the source of the incident light as a fluorescent lamp. Once the source has been identified as a fluorescent lamp, the program proceeds to set the data for the gain control amplifiers (GCA) 19, 20 and 21 such that the gain of the gain control amplifier 19 is greater than the gain of the gain control amplifier 20, and the gain of the gain control amplifier 20 is less than the gain of the gain control amplifier 21. Once the data for the gain control amplifiers 19, 20 and 21 has been set, the program proceeds to set the gain for each control amplifier, and then ends.

At a second decision point, the program determines whether the data in $REG_1$ is greater than the data in $REG_2$. If the data in $REG_2$ is greater than the data in $REG_2$, the program identifies the source of incident light as cloudy daylight. The program proceeds to compute the ratio of the data in $REG_1$ and $REG_2$. After the ratio has been determined, the digital data is converted to analog data. The program proceeds to set the data for the gain control amplifiers 19, 20 and 21 such that the gain of the gain control amplifier 19 is greater than the gain of the gain controller 20, and the gain of the gain control amplifier 20 is equal to the gain of the gain control amplifier 21. As hereinbefore described, the gains for each of the gain control amplifiers are set, and the program terminates.

At a third decision point, the program determines whether the data in $REG_1$ is equal to the data in $REG_2$. If the data in $REG_1$ is equal to the data in $REG_2$, the program identifies the source of the incident light as bright sunlight, and the program proceeds to set the data for the gain control amplifiers 19, 20 and 21. In this case, the gains of all three gain control amplifiers 19, 20 and 21 are equal. As described before, the gain for each gain control amplifier is set, and the program terminates.

At a fourth decision point, the program determines whether the data in $REG_1$ is less than the data in $REG_2$. If the data is less, the program determines that the source of the incident light is an incandescent lamp. The program proceeds to set the data for the gain control amplifiers 19, 20 and 21 whereby the gain of the gain control amplifier 19 is made less than the gain of the gain control amplifier 20, which is less than the gain of the gain amplifier 21. As before, the program proceeds to set the gain for each of the gain control amplifiers, and then terminates.

If the data in $REG_1$ is not less than the data of $REG_2$, as determined at the fourth decision point, the program determines that the source of the incident light corresponds to illumination by a setting sun. The program proceeds to set the data for the gain control amplifiers 19, 20 and 21 such that the gain of the gain control amplifier 19 is made very much less the gain of the gain control amplifier 20, which is less than the gain of the gain control amplifier 21. The program proceeds to set the gains of the gain control amplifiers, and then terminates.

If, as described above with reference to Figure 5A, the electronic camera is set in either the UNDER or the OVER modes, the program proceeds at the point "C" and sets the gain for each of the gain control amplifiers as hereinbefore described, and the program terminates.

It is to be appreciated that when the white balance of the present electronic camera is adjusted as described above, and the reproduced image is supplied to a monitor or is used to generate a hard copy, no further adjustments to the white balance are required to produce a pleasing image.

It is further to be appreciated that the light receiving elements 25 and 26 are positioned on the upper portion of camera housing 1 to detect the light incident thereon. Even though the light from a subject is monochromatic light, for example, the source of the light can be identified accurately.

## Claims

1. An electronic camera comprising:

means for producing a colour image signal corresponding to an object in a field of view of the camera and having an adjustable white balance;

first light receiving means (25) for generating a first signal in response to the luminous intensity of incident light in a first spectrum;

second light receiving means (26) for generating a second signal in response to the luminous intensity of incident light in a second spectrum; and

means responsive to the relative values of the first and second signals for correspondingly adjusting the white balance to adapt the camera to the incident light; characterised in that:

the camera includes means (10) for recording the colour image signal on a record medium (11);

the first and second light receiving means (25, 26) are responsive to the luminous intensity of incident light in the mercury and near infrared spectra, respectively; and

the means for adjusting the white balance is operative, in order to adapt the camera for use with incident light from a fluorescent lamp, incident light from an incandescent lamp, or natural incident light, to:

(i) set the white balance for light from a fluorescent lamp when the first signal corresponds to a high luminous intensity in the mercury spectrum and the second signal corresponds to a low luminous intensity in the near infrared spectrum;

(ii) set the white balance for light from an incandescent lamp when the first signal corresponds to a low luminous intensity in the mercury spectrum and the second signal corresponds to a high luminous intensity in the near infrared spectrum; and

(iii) set the white balance for natural light when the first and second signals correspond to high luminous intensities in both the mercury spectrum and the near infrared spectrum.

2. A camera according to claim 1, wherein the means for producing a colour image signal comprises means (15) for separating the colour image signal into red, blue and green primary colour signals, and wherein the means for adjusting the white balance includes means (34) for varying continuously the intensity of the red colour signal in response to at least the second signal corresponding to the luminous intensity of the near infrared spectrum.

3. A camera according to claim 1 or claim 2, comprising an electronic flash unit (36) for transmitting light of a predetermined colour to illuminate the object, and means for coupling the electronic flash unit (36) to the means for adjusting the white balance so that such means adjusts the white balance corresponding to the predetermined colour of the light from the electronic flash unit.

4. A camera according to claim 1, claim 2 or claim 3, which comprises a housing (1) having a forward slanting upper surface that receives the first and second light receiving means (25, 26).

5. A camera according to any one of the preceding claims, which is a still camera.

## Patentansprüche

1. Elekronische Kamera

mit Mitteln zur Erzeugung eines einem Objekt im Sucherfeld der Kamera entsprechenden Farbbildsignals mit einstellbarer Weißbalance,

mit ersten Lichtempfangsmitteln (25) zur Erzeugung eines ersten Signals in Abhängigkeit von der Beleuchtungsstärke des einfallenden Lichts in einem ersten Spektralbereich,

mit zweiten Lichtempfangsmitteln (26) zur Erzeugung eines zweiten Signals in Abhängigkeit von der Beleuchtungsstärke des einfallenden Lichts in einem zweiten Spektralbereich,

sowie mit einer auf die relativen Werte des ersten und des zweiten Signals ansprechenden Einrichtung für die entsprechende Einstellung der Weißbalance zur Anpassung der Kamera an das einfallende Licht, dadurch gekennzeichnet,

daß die Kamera Mittel (10) zur Aufzeichnung des Farbbildsignals auf einem Aufzeichnungsmedium (11) enthält,

daß die ersten und die zweiten Lichtempfangsmittel (25, 26) auf die Beleuchtungsstärke des einfallenden Lichts im Quecksilberspektrum bzw. im nahen Infrarotspektrum ansprechen,

daß die Mittel für die Einstellung der Weißbalance zur Anpassung der Kamera an das Licht einer Leuchtstofflampe, das Licht einer Glühlampe oder an natürliches Licht in der Weise wirksam sind, daß

(i) die Weißbalance auf das Licht einer Leuchtstofflampe eingestellt wird, wenn das erste Signal einer großen Beleuchtungsstärke im Quecksilberspektrum und das zweite Signal einer niedrigen Beleuchtungsstärke im nahen Infrarotspektrum entspricht,

(ii) die Weißbalance auf das Licht einer Glühlampe eingestellt wird, wenn das erste Signal einer niedrigen Beleuchtungsstärke im Quecksilberspektrum und das zweite Signal einer hohen Beleuchtungsstärke im nahen Infrarotspektrum entspricht, und

(iii) die Weißbalance auf natürliches Licht eingestellt wird, wenn das erste und das zweite Signal hohen Beleuchtungsstärken sowohl im Quecksilberspektrum als auch im nahen Infrarotspektrum entsprechen.

2. Kamera nach Anspruch 1, bei der die Mittel zur Erzeugung eines Farbbildsignals Mittel (15) zur Auftrennung des Farbbildsignals in ein rotes, ein blaues und ein grünes Primärfarbsignal aufweisen und bei der die Einrichtung zur Einstellung der Weißbalance Mittel zur kontinuierlichen Änderung der Intensität des roten Farbsignals in Abhängigkeit von zumindest dem der Beleuchtungsstärke im nahen Infrarotspektrum entsprechenden zweiten Signal aufweist.

3. Kamera nach Anspruch 1 oder 2 mit einer elektronischen Blitzlichteinrichtung (36) zur Aussendung von Licht bestimmter Farbe zur Beleuchtung des Objekts sowie mit Mitteln zur Verbindung der elektronischen Blitzlichteinrichtung (36) mit der Einrichtung zur Einstellung der Weißbalance derart, daß diese die Weißbalance entsprechend der bestimmten Farbe des Lichts der elektronischen Blitzlichteinrichtung einstellen.

4. Kamera nach Anspruch 1, 2 oder 3 mit einem Gehäuse (1) mit abgeschrägter Vorderseite, an der die ersten und die zweiten Lichtempfangsmittel (25, 26) angeordnet sind.

5. Kamera nach einem der vorhergehenden Ansprüche, die eine Standbildkamera ist.

**Revendications**

1. Une caméra ou un appareil photographique électronique comprenant:

des moyens destinés à produire un signal d'image en couleur correspondant à un objet dans un champ de la caméra ou de l'appareil photographique et ayant un équilibre du blanc réglable;

des premiers moyens de réception de lumière (25) destinés à produire un premier signal sous la dépendance de l'intensité lumineuse de la lumière incidente dans une première plage spectrale;

des seconds moyens de réception de lumière (26) destinés à produire un second signal sous la dépendance de l'intensité lumineuse de la lumière incidente dans une seconde plage spectrale; et

des moyens qui fonctionnent sous la dépendance des valeurs relatives des premier et second signaux pour régler de façon correspondante l'équilibre du blanc afin d'adapter la caméra ou l'appareil photographique à la lumière incidente; caractérisé en ce que:

la caméra ou l'appareil photographique comprend des moyens (10) destinés à enregistrer le signal d'image en couleur sur un support d'enregistrement (11);

les premiers et seconds moyens de réception de lumière (25, 26) sont sensibles à l'intensité lumineuse de la lumière incidente dans des plages spectrales correspondant respectivement au mercure et au proche infrarouge; et

les moyens destinés à régler l'équilibre du blanc accomplissent les opérations suivantes, dans le but d'adapter la caméra ou l'appareil photographique à l'utilisation avec de la lumière incidente provenant d'une lampe fluorescente, avec de la lumière incidente provenant d'une lampe à incandescence, ou avec de la lumière incidente naturelle:

(i) ils règlent l'équilibre du blanc pour la lumière provenant d'une lampe fluorescente lorsque le premier signal correspond à une intensité lumineuse élevée dans la plage spectrale du mercure et le second signal correspond à une faible intensité lumineuse dans la plage spectrale du proche infrarouge;

(ii) ils règlent l'équilibre du blanc pour la lumière provenant d'une lampe à incandescence lorsque le premier signal correspond à une faible intensité lumineuse dans la plage spectrale du mercure et le second signal correspond à une intensité lumineuse élevée dans la plage spectrale du proche infrarouge; et

(iii) ils règlent l'équilibre du blanc pour la lumière naturelle lorsque les premier et second signaux correspondent à des intensités lumineuses élevées à la fois dans la plage spectrale du mercure et dans la plage spectrale du proche infrarouge.

2. Une caméra ou un appareil photographique selon la revendication 1, dans lequel les moyens destinés à produire un signal d'image en couleur comprennent des moyens (15) destinés à séparer le signal d'image en couleur en signaux de couleurs primaires rouge, bleu et vert, et dans lequel les moyens destinés à régler l'équilibre du blanc comprennent des moyens (34) qui font varier continuellement l'intensité du signal de couleur rouge sous la dépendance, au moins, du second signal correspondant à l'intensité lumineuse dans la plage spectrale du proche infrarouge.

3. Une caméra ou un appareil photographique selon la revendication 1 ou la revendication 2, comprenant un flash électronique (36) destiné à émettre de la lumière d'une couleur prédéterminée pour illuminer l'objet, et des moyens qui connectent le flash électronique (36) aux moyens de réglage de l'équilibre du blanc, de façon que ces derniers règlent l'équilibre du blanc en correspondance avec la couleur prédéterminée de la lumière qui est émise par le flash électronique.

4. Une caméra ou un appareil photographique selon la revendication 1, la revendication 2 ou la revendication 3, comprenant un boîtier (1) qui présente une surface supérieure inclinée vers l'avant sur laquelle sont montés les premiers et seconds moyens de réception de lumière (25, 26).

5. Une caméra ou un appareil photographique selon l'une quelconque des revendications précédentes, caractérisé en ce qu'il s'agit d'un appareil photographique.

FIG. 1

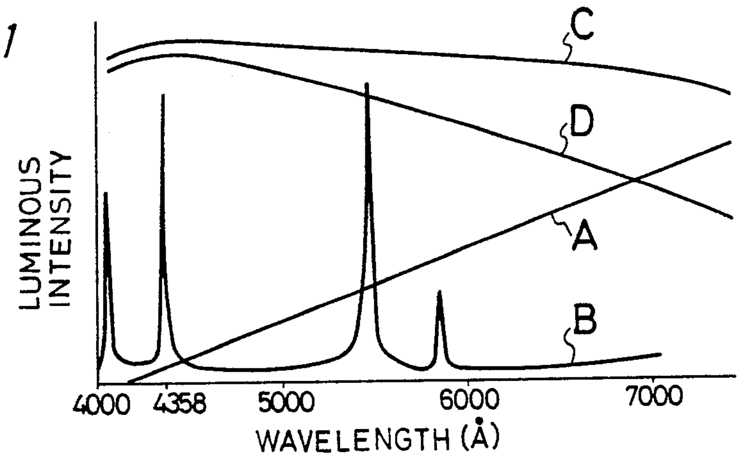
C
D
A
B
LUMINOUS INTENSITY
4000
4358
5000
6000
7000
WAVELENGTH (Å)

FIG. 2

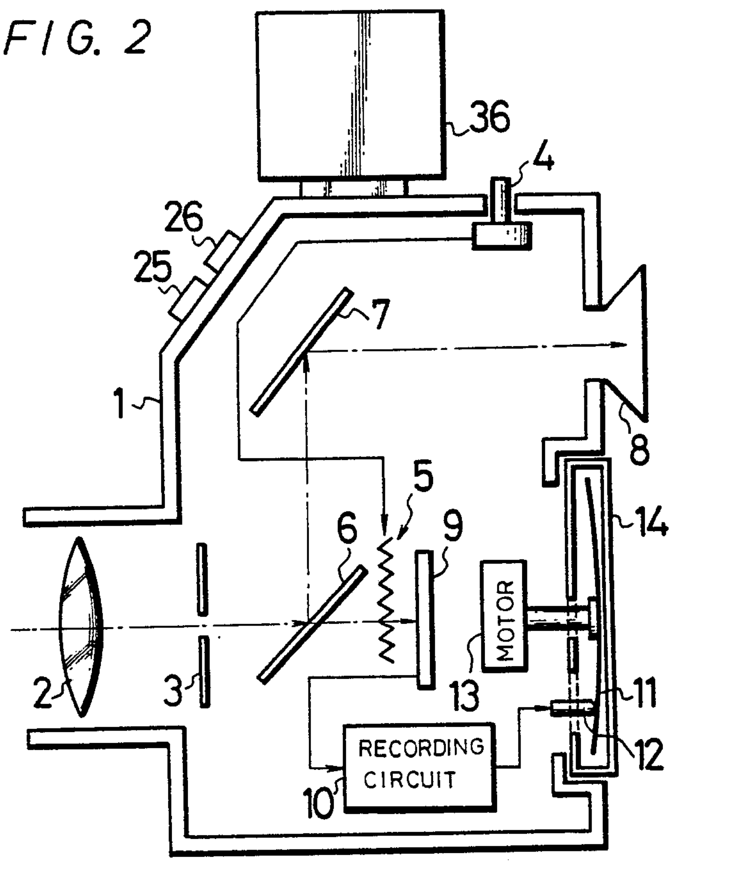
36
4
26
25
7
1
8
5
6
9
14
MOTOR
2
3
13
11
12
RECORDING CIRCUIT
10

FIG. 3

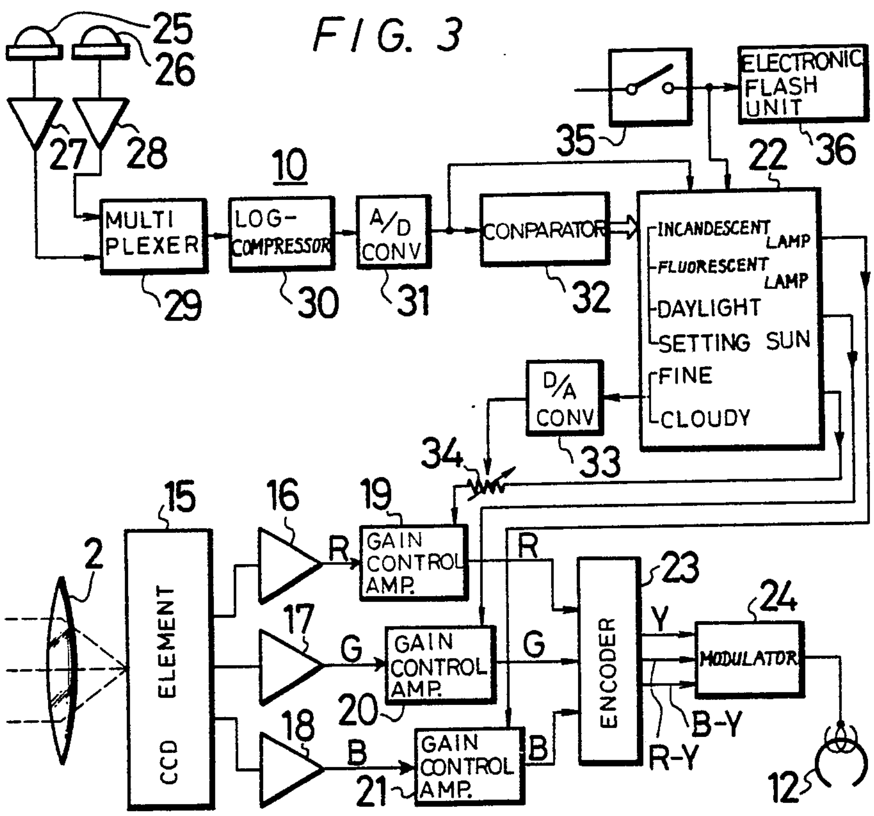
25
26
27
28
10
MULTI PLEXER
LOG-COMPRESSOR
A/D CONV
CONPARATOR
35
ELECTRONIC FLASH UNIT
22
36
INCANDESCENT LAMP
FLUORESCENT LAMP
DAYLIGHT
SETTING SUN
FINE
CLOUDY
29
30
31
32
D/A CONV
33
34
15
16
19
2
CCD ELEMENT
R
GAIN CONTROL AMP.
R
ENCODER
23
24
17
G
GAIN CONTROL AMP.
G
Y
MODULATOR
20
18
B
GAIN CONTROL AMP.
B
B-Y
R-Y
21
12

FIG. 4

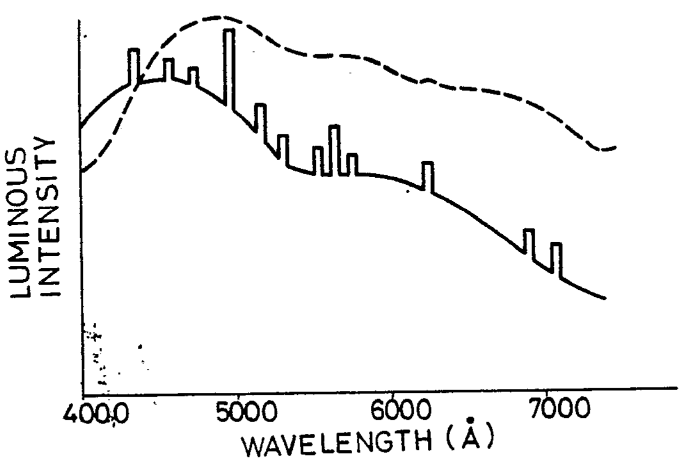
LUMINOUS INTENSITY
4000
5000
6000
7000
WAVELENGTH (Å)

FIG. 5A

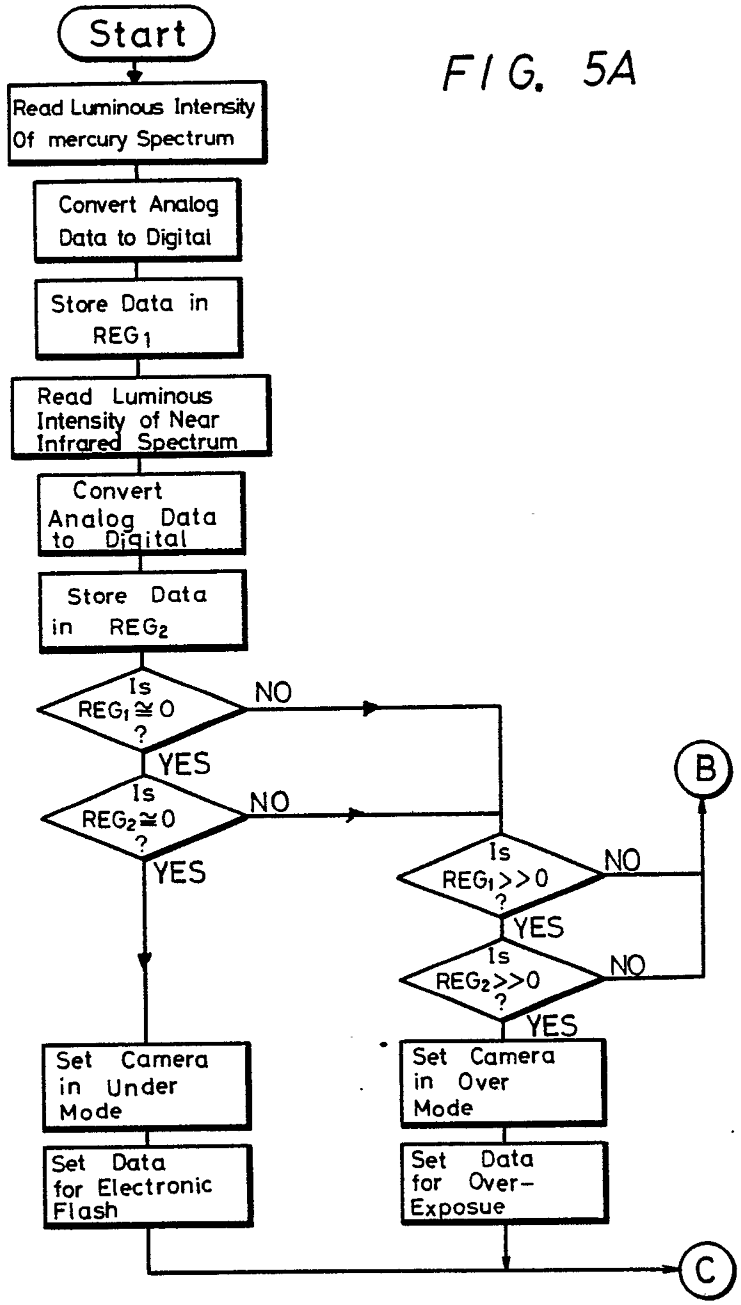
Start
Read Luminous Intensity Of mercury Spectrum
Convert Analog Data to Digital
Store Data in REG1
Read Luminous Intensity of Near Infrared Spectrum
Convert Analog Data to Digital
Store Data in REG2
Is REG1≅0 ?
NO
YES
Is REG2≅0 ?
NO
YES
B
Is REG1>>0 ?
NO
YES
Is REG2>>0 ?
NO
YES
Set Camera in Under Mode
Set Data for Electronic Flash
Set Camera in Over Mode
Set Data for Over-Exposue
C

FIG. 5B

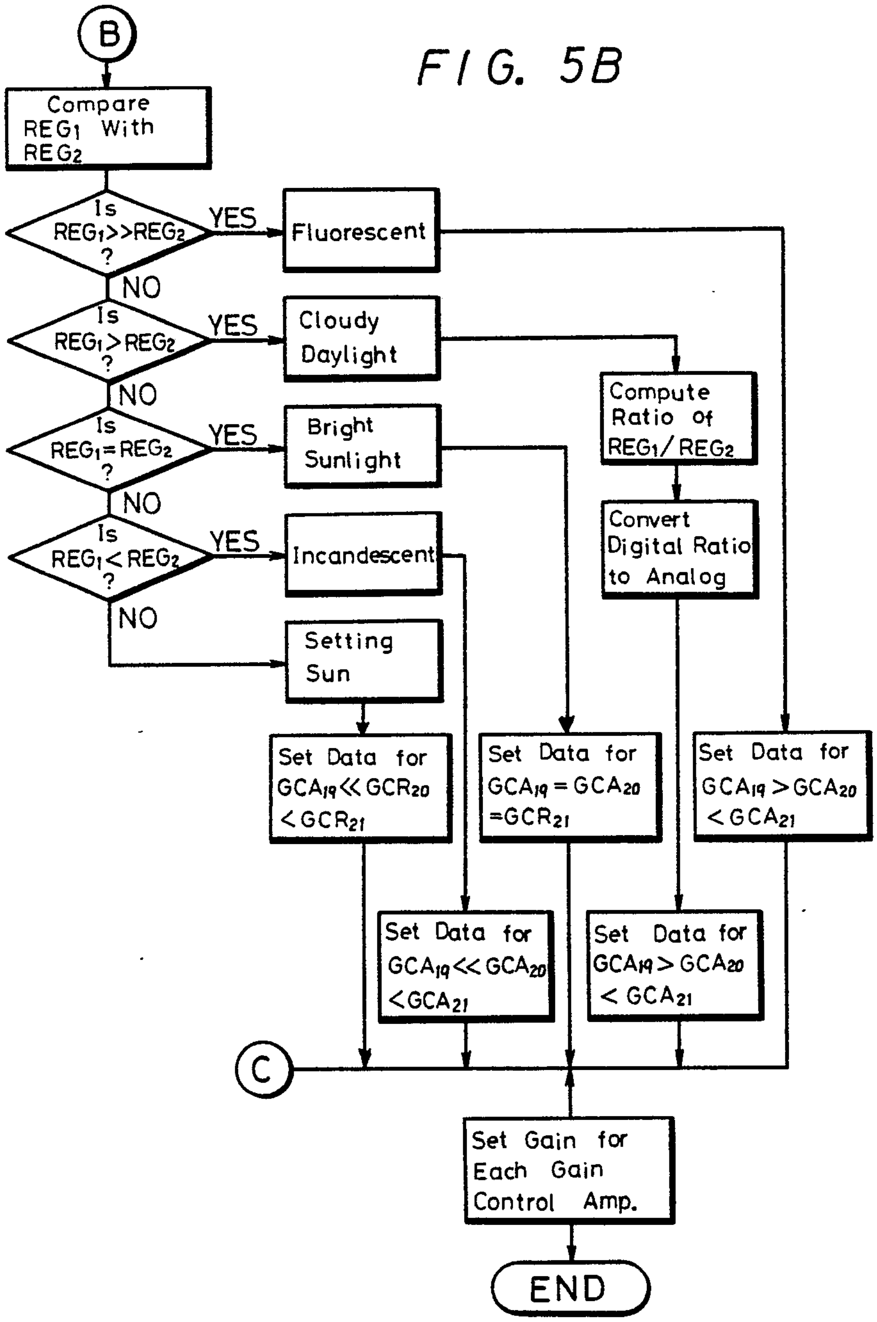
B
Compare REG1 With REG2
Is REG1>>REG2 ?
YES
Fluorescent
NO
Is REG1>REG2 ?
YES
Cloudy Daylight
NO
Is REG1=REG2 ?
YES
Bright Sunlight
NO
Is REG1<REG2 ?
YES
Incandescent
NO
Setting Sun
Compute Ratio of REG1/REG2
Convert Digital Ratio to Analog
Set Data for GCA19<<GCR20 <GCR21
Set Data for GCA19=GCA20 =GCR21
Set Data for GCA19>GCA20 <GCA21
Set Data for GCA19<<GCA20 <GCA21
Set Data for GCA19>GCA20 < GCA21
C
Set Gain for Each Gain Control Amp.
END